# EUROPEAN PATENT SPECIFICATION

(11) **EP 3 732 518 B1**
(45) Date of publication and mention of the grant of the patent: **07.12.2022**
(21) Application number: 17821939.0
(22) Date of filing: 27.12.2017
(51) Int. Cl.: G02B 6/44

(54) **OPTICAL TERMINATION BOX AND OPTICAL TERMINATION ASSEMBLY**
OPTISCHE ABSCHLUSSDOSE UND OPTISCHE ABSCHLUSSANORDNUNG
BOÎTE DE TERMINAISON OPTIQUE ET ENSEMBLE DE TERMINAISON OPTIQUE

(43) Date of publication of application: 04.11.2020
(73) Proprietor: Prysmian S.p.A., 20126 Milano (IT)
(72) Inventor: ABBIATI, Fabio, 20126 Milano MI (IT)
(74) Representative: Perani & Partners S.p.A.
(86) International application number: PCT/EP2017/084645
(87) International publication number: WO 2019/129345

(56) References cited:
- EP-A1- 2 993 505
- WO-A1-2017/083300
- WO-A2-2009/045689
- CN-A- 106 338 801
- CN-U- 203 012 209
- CN-U- 203 786 349
- DE-U1-202014 103 223
- US-A1- 2016 077 298
- US-A1- 2016 327 766

## Description

### Field of the invention

The present invention relates to the field of equipment and components for the installation of optical cables in optical access networks. In particular, the present invention relates to an optical termination box and an optical termination assembly.

### Background of the invention

A FTTH ("Fiber To The Home") network is an optical access network providing a number of end customers with broadband communication services from operators, i.e. with services requiring data transmission at a very high rate, for example of some Mbit/s.

Typically, a FTTH network comprises a distribution box or cabinet which cooperates with an access network and which is typically located in the basement of the building where the end users reside. An optical trunk cable, hereinafter referred to as "riser cable", exits the distribution box and runs through the building from the basement up to all the building floors.

At each floor of the building, the riser cable may be optically connected to one or more optical cables, hereinafter referred to as "drop cables". Each drop cable typically terminates at its far end into a respective customer optical termination box located within or in proximity of the apartment or office of an end user.

There is a demand from end users for thinner optical termination boxes having reduced thickness, comparable with the thickness of power sockets.

US 2016/0327766 discloses an access terminal box with a protective cover, a base, and a base plate. The protective cover has a cover plate and side walls that are disposed around the cover plate. The cover plate and the side walls form an open-mouthed box structure in which the base is fastened inside the open-mouthed box structure of the protective cover by using a first detachable structure. The base is also fastened to the base plate by using a second detachable structure. In some embodiments, when the base has to be detached from the base plate, it is not required to first detach the protective cover. Therefore, a fiber coiled on the base can be better protected, possible damages to the fiber can be avoided, and it is suitable for non-professional personnel to detach the access terminal box. With this solution, however, the optical adapters are placed on the bottom wall of a separate structure which increases the overall thickness of the terminal box.

WO 2011/076275 discloses an optical termination assembly with an optical termination box and a drop cable. The drop cable has a first end housed in a first compartment of the optical termination box. The first end of the drop cable is pre-connectorized. The optical termination box comprises at least one first fixing element accessible from the outside suitable for fixing the optical termination box to a support structure. Also with this solution, the optical adapters are arranged on the bottom wall of the base. Since the wall of the base projects upwards and downwards from the base, the thickness of the optical termination box is substantial and it cannot be reduced. <insert page 2a>

### Summary of the invention

The Applicant has tackled the problem of providing an optical termination box capable of hosting an optical adapter while keeping the thickness as small as possible.

CN203786349U discloses an optical fiber protection structure relates to the communication technology field, and is characterized in that the back surface of the optical fiber protection structure is equipped with a rectangular groove and a strip-like groove, the rectangular groove comprises two adjacent inner side surfaces, and one inner side surface is communicated with the strip-like groove and is equipped with a protruding head; the protruding head extends towards the interior of the rectangular groove, and the other inner side surface is equipped with a square hole; the square hole and the strip-like groove are located at the two sides of the protruding head respectively, and the sum of the height of the protruding head and the radius of an optical fiber is not less than the distance from the axis of the square hole to the inner side surface on which the protruding head is located. By this way, an optical fiber joint is prevented from swinging at a port of an optical fiber adapter due to an external force, thereby guaranteeing the passing rate of an optical signal.

The Applicant has found an optical termination box with a base and a cover and a side opening formed in one side wall of the base, in which a recess is formed in the bottom wall of the base to support the back portion of an optical adapter and a bottom opening is formed in the bottom wall of the base to house partially the front portion of the optical adapter. With this arrangement, the overall thickness of the optical termination box installed on a wall box or support frame can be reduced to the sum of the thickness of the height of the optical adapter and the height of the cover.

Therefore, the present invention relates to an optical termination box according to claim 1.

Preferably, the recess comprises a bottom wall arranged at a lower position with respect to the bottom wall of the base, thereby a lower portion of the front portion of the optical adapter being allowed to protrude in the bottom opening flush with the bottom wall of the base.

Preferably, the bottom wall of the recess is connected with inner edges of the bottom wall of the base and the bottom wall of the recess and the inner edges of the bottom wall of the base define an adapter seat configured to house and support the back portion of the optical adapter.

Preferably, a cover is removably attached on top to the base to define a compartment with the base and to close the compartment, the cover having a top wall and one or more side walls projecting from the top wall, a side opening is formed in one side wall of the cover, the side opening of the cover is arranged in the side wall of the cover to define, with the side of opening of the base, a termination opening of the termination box, when the cover is attached to the base, the termination opening is configured to receive an end user optical connector to be connected with the optical adapter retained in the optical termination box.

Preferably, the bottom wall comprises a cable opening for passage of an optical cable and fastening openings for passage of fastening members for fastening the optical termination box on top of a wallbox.

Preferably, an optical adapter is arranged in the base and removably retained by the retaining members, the optical adapter having the back portion supported by the recess and the front portion partially housed in the bottom opening.

According to a further aspect, the present invention relates to an optical termination assembly according to claim 9 comprising the inventive optical termination box.

### Brief description of the drawings

The present invention will now be described in more detail hereinafter with reference to the accompanying drawings, in which some embodiments of the invention are shown.
FIG. 1 is a perspective view of an optical termination box according to a first embodiment,
FIG. 2 is a perspective view of the optical termination box of FIG. 1 in a partially assembled configuration,
FIG. 3 is a section view of the optical termination box of FIG. 1,
FIG. 4 is a perspective view of the base of the optical termination box of FIG. 1 with the optical adapter removed,
FIG. 5 is perspective view of the optical termination box of FIG. 1 with a support frame and a wallbox in a partially assembled configuration
FIG. 6 is a perspective view of an optical termination box according to a second embodiment,
FIG. 7 is a perspective view of the optical termination box of FIG. 6 in a partially assembled configuration.

### Detailed description

For the purposes of the present description and claims an optical cable is deemed to be any cable comprising one or more optical fibre arranged within an outer sheath, together with optional flexible strength members, as required for the specific installation conditions.

A pre-connectorized optical cable is generally an optical cable having an end portion with one or more optical fibers each terminating with an optical connector.

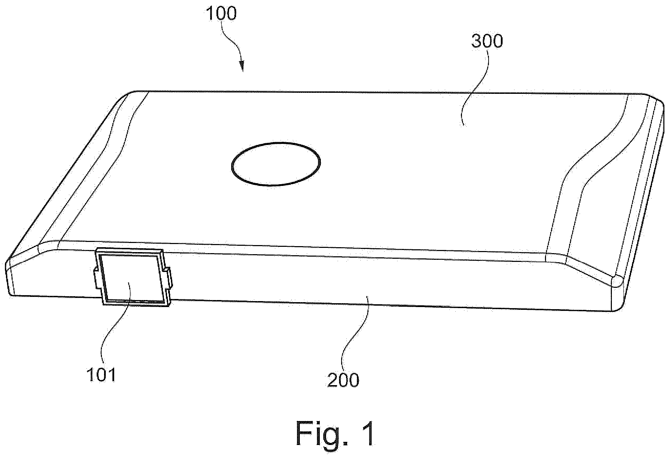

Figure 1 shows an optical termination box 100 comprising a base 200 and a cover 300 and a termination opening 101.

The pre-connectorized optical cable has an end portion 11 housed in the optical termination box 100. This end portion 11 comprises one or more optical fibers 12 where each optical fiber 12 is connected with a respective optical connector 13 to be connected with a corresponding end user optical connector. The optical connector 13 may be SC connector, APC connector or the like.

The termination box 100 comprises a base 200 and a cover 300 removably attached to the base 200. Preferably, the cover 300 is attached on top to the base 200 to define a compartment 202 with the base 200 and to close the compartment 202.

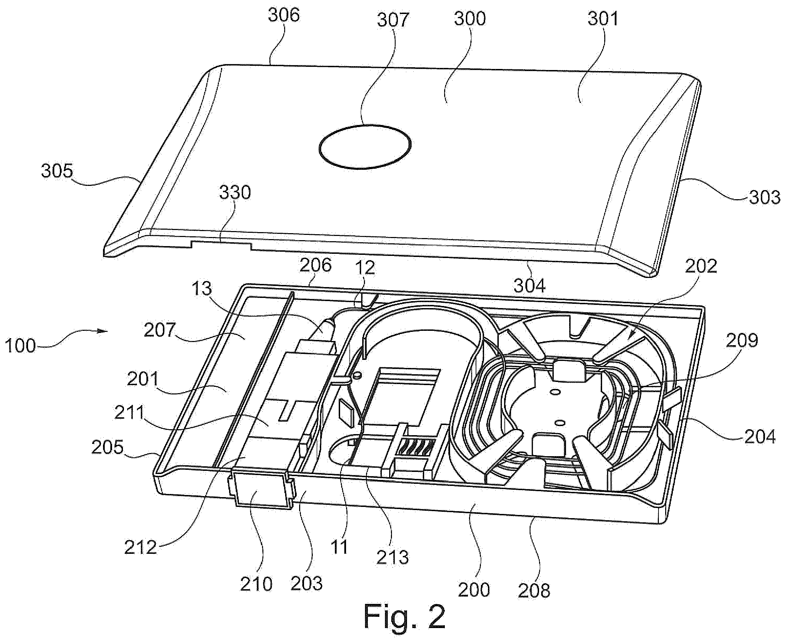

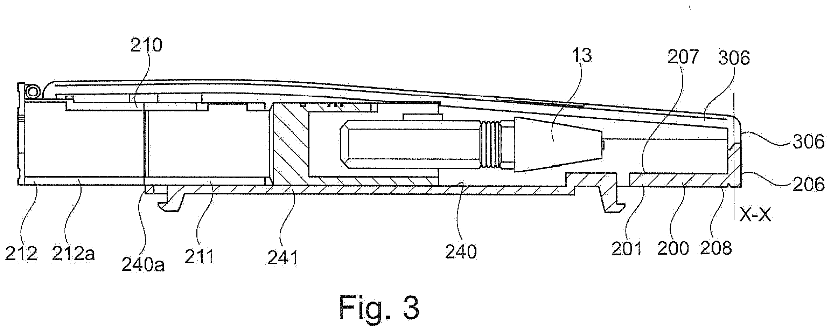

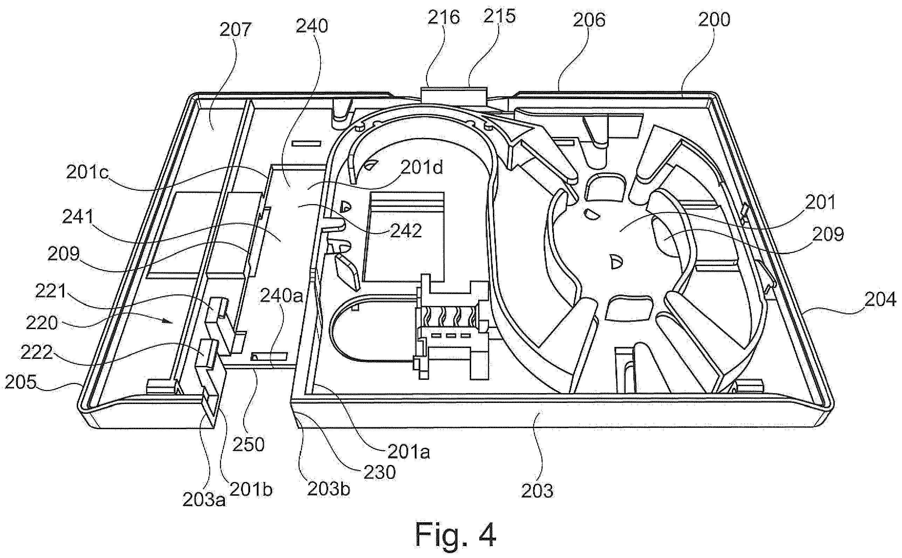

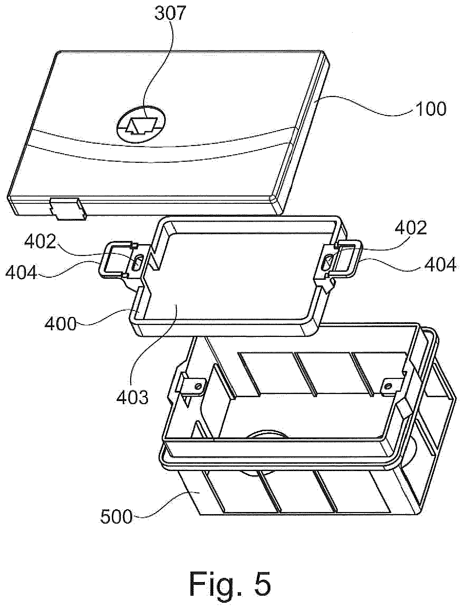

The base 200 comprises a bottom wall 201 and four side walls 203, 204, 205, 206 projecting from the bottom wall 201. The side walls 203, 204, 205, 206 project from the bottom wall 201 substantially perpendicular to the bottom 201, as shown in the example of figures 1-7, along a direction X-X.

The cover 300 comprises a top wall 301 and four side walls 303, 304, 305, 306 projecting from the top wall 301. Preferably, the top wall 301 has a top opening 307 and a telecommunication connector, for example a female RJ11 connector, configured to receive an RJ11 or RJ45 terminal.

According to a different embodiment, the base 200 may be provided with three or less side walls and the cover 300 with the three or less side walls or without side walls, provided that the base 200 has at least one side wall and, when the cover 300 is attached to the base 200, the compartment 202 is delimited laterally by the side walls of the base 200 and the side walls of the cover 300, on top by the top wall 301 of the cover 300 and underneath by the bottom wall 201 of the base 200.

Preferably, the cover 300 is attached to the base 200 by attachment members formed in the side wall of the cover 300 and the base 200. According to one embodiment, the attachment members comprise a tab 215 formed in a side wall of the base 200 and equipped with a teeth 216 and a slot (not shown) formed in a side wall of the cover 300 receiving the teeth 216 of the tab 215 to retain the cover 300 attached to the base 200.

The bottom wall 201 has an inner surface 207 facing the cover 300, when the cover 300 is attached to the base 200, and an outer surface 208 opposite to the inner surface 207.

The bottom wall 201 comprises a cable opening 213 for passage of an optical cable. In case of a pre-connectorized optical cable, such as the end portion of a pre-connectorized optical cable 11, when manufacturing the optical termination box the operator may pass the optical cable through the cable opening 213, removes an end portion of the outer sheath to expose an optical fiber 12 and splices the optical fiber 12 to the pigtail of the optical connector 13. In an alternative manner, the optical connector 13 may be connected to the optical fiber 12 without need to splice to a pigtail. The base 200 comprises also storage frames, in which excess lengths of optical fiber 12 may be coiled, if necessary.

According to one embodiment, the bottom wall 201 comprises fastening openings 209 to prevent interference with screw heads of a wall box , or for passage of fastening members (not shown) for fastening the optical termination box 100 on top of a wallbox 500, embedded in a wall.

In the embodiment of figures 1-5, the optical termination box 100 is configured to be removably attached to a support frame 400 which, in turn, is configured to be fastened on top of the wallbox 500. The support frame 400 is attached underneath the base 200, preferably through snap engagement members, and comprises fastening openings 402 for passage of fastening members (not shown) for fastening the support frame 400, and the optical termination box 100 attached thereto, to the wallbox 500. This allows to adjust the position and tilt of the support frame 400 relative to the wallbox 500. According to one embodiment, the support frame 400 comprises two abutment members 404, more preferably U shaped brackets, designed to engage with a corresponding recess or opening in the bottom wall 201. The engagement of the abutment members 404 with the bottom wall 201 allows the base 200 to be kept flush with the wall in which the wallbox 500 is embedded in case the wallbox 500 itself has not been installed correctly by the operator in the wall, flush with the wall.

In this embodiment, the support frame 400 defines cable passage 403 for passage of the optical cable. With this arrangement, an operator is able to install the optical termination box 100 at the end user premises without any need to remove the cover 300 from the base 200.

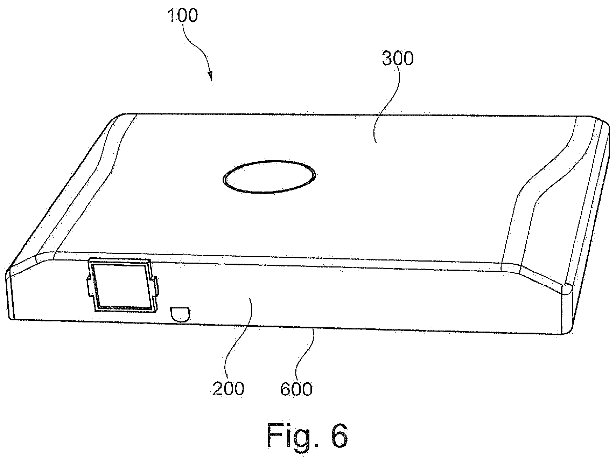

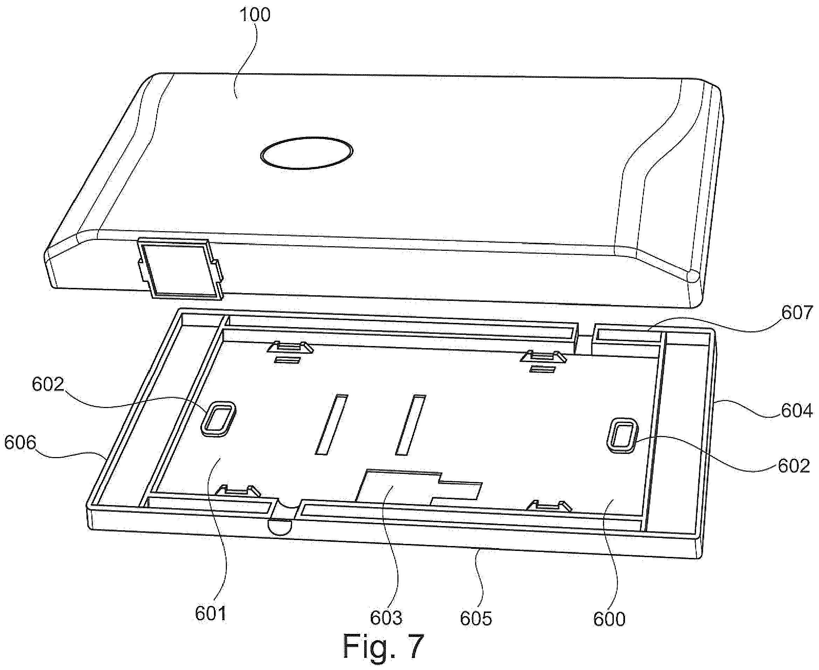

In the embodiment of figures 6 and 7, the optical termination box 100 is configured to be removably attached to a support frame 600 which is configured to be fastened on a wall. The support frame 600 is attached underneath the base 200, preferably through snap engagement members, and comprises fastening openings 602 for passage of fastening members (not shown) for fastening the support frame 600, and the optical termination box 100 attached thereto, to a wall. In this embodiment, the support frame 600 has a bottom wall 601 and side walls 604, 605, 606, 607 projecting from the bottom wall 601 along the direction X-X, towards the bottom wall 201 of the base 200 of the optical termination box 100. At least one of said side walls 604, 605, 606, 607 comprises a weakening line defining a removable portion, said weakening line being configured so that, when said removable portion is removed a passageway is created in said at least one of said sidewalls for the optical cable. Also with this arrangement, an operator is able to install the optical termination box 100 at the end user premises without any need to remove the cover 300 from the base 200.

An optical adapter 210 is arranged and retained in the base 200. The optical adapter 210 has a back portion 211 connected to the optical connector 13 of the pre-connectorized optical cable and a front portion 212.

The optical adapter 210 is removably retained in the base 200 by retaining members 220 provided on the inner surface 207 and removably retaining the optical adapter 210. The retaining members 220 project from the inner surface 207 of the bottom wall 201 and comprise snap engagement members configured to snap engage the optical adapter 210.

The optical adapter 210 allows a connection between the optical connector 13 of the pre-connectorized optical cable and an end user optical connector, for example the optical connector of a modem or router of the end user (not shown).

A side opening 230 is formed in the side wall 203 for allowing connection from outside of the end user optical connector to the optical connector 13 of the pre-connectorized optical cable. In particular, the end user optical connector may pass through the opening 230 to connect to the optical adapter 210 and, through the optical adapter 210, to the optical connector 13 connected thereto.

The side opening 230 is defined solely by two opposite, faced lateral edges 203a, 203b formed in the side wall 203 while the side opening 230 is opened on the top, towards the cover 300, and on bottom.

According to one embodiment, the cover 300 has a side opening 330 formed in the side wall 300. This side opening 330 of the cover 300 is arranged in the side wall 303 of the cover 300 to define, with the side of opening 230 of the base 200, a termination opening 101 of the optical termination box 100, when the cover 300 is attached to the base 200. This termination opening 101 is configured to receive the end user optical connector to be connected with the optical adapter 210 retained in the optical termination box 100.

A recess 240 is formed in the bottom wall 201 and supports the back portion 211 of the optical adapter 210, preferably only the back portion 211 of the optical adapter 210. The front portion 212 of the optical adapter 210 is cantilevered from the recess 240 and projects towards the side opening 230.

A bottom opening 250 is formed in the bottom wall 201 and houses partially the front portion 212 of the optical adapter 210, thereby the front portion 212 of the optical adapter 210 projects from the recess 240 and is housed partially within the bottom opening 250. With this arrangement, the thickness of the optical termination box 100 installed on a wall box 500 or support frame 600, measured along the direction X-X, is minimised and corresponds to the sum of the height of the optical adapter 210 and the height of the cover 300, always measured along the direction X-X. This allows the optical termination box 100 to be arranged with the lower edge of the side walls of the base 200 flush with the outer surface of the wall as it is commonly done with a power socket, without affecting appearance of the wall to which the optical termination box 100 has to be applied.

When the support frame 400 is used, as the support frame 400 is intended to be arranged in the wall as well as the wallbox 500, the optical termination box 100 may be arranged in any case with the lower edge of the side walls of the base 200 flush with the outer surface of the wall.

When the support frame 600 is used, this support frame 600 is intended to be arranged on the wall. With this embodiment, the overall thickness of the optical termination box 100 is increased by the thickness of the bottom wall 601 and the height of side walls 604, 605, 606, 607 of the support frame 600.

The bottom opening 250 is defined by a front edge 240a of the recess 240 facing towards the side opening 230 and two opposite lateral edges 201a, 201b of the bottom wall 201.

The bottom opening 250 extends between the front edge 240a of the recess 240 and the side opening 230 so that the bottom opening 250 joins with the side opening 230 as a seamless bottom-side opening.

In particular, the two opposite lateral edges 203a, 203b of the side wall 203 joins respectively with the two opposite lateral edges 201a, 201b of the bottom wall 201, thereby joining the side opening 230 and the bottom opening 250.

According to one embodiment, the recess 240 comprises a bottom wall 241 arranged at a lower position with respect to the bottom wall 201 of the base 200, thereby a lower portion 212a of the front portion 212 of the optical adapter 210 protrudes in the bottom opening 250 flush with the bottom wall 201 of the base 200.

In particular, the bottom wall 241 of the recess 240 is connected with inner edges 201c, 201d of the bottom wall 201 of the base 200. Moreover, the bottom wall 241 of the recess 240 and the inner edges 201c, 201d of the bottom wall 201 of the base 200 define an adapter seat 242 housing and supporting the back portion 211 of the optical adapter 210.

The retaining members 220 are arranged adjacent the bottom opening 250 and the recess 240. In particular, the retaining members 220 comprises first retaining members 221 acting on the back portion 211 of the optical adapter 210 supported by the bottom wall 241 of the recess 240 and second retaining member 222 acting on the front portion 212 of the optical adapter protruding from the recess 240.

The optical termination box according to the invention allows to reduce as much as possible the thickness of the box and to reduce the installation time at the end user premises. When a support frame is used with the optical termination box, installation becomes even much quicker and safer as there is no need to remove the cover.

## Claims

1. An optical termination box (100) comprising:
- a base (200) with a bottom wall (201) and one or more side walls (203, 204, 205, 206), the one or more side walls (203, 204, 205, 206) projecting from the bottom wall (201) along a direction (X-X) transverse to the bottom wall (201),
- retaining members (220) arranged in the base and configured to removably retain an optical adapter (210), the optical adapter (210) having a back portion (211) and a front portion (212),
- a side opening (230) formed in one side wall (203) for allowing side access from outside to the optical adapter (210) and passage of an end user optical connector to be connected to the optical adapter (210),
- a recess (240) formed in the bottom wall (201) for supporting the back portion (211) of the optical adapter (210),
- a bottom opening (250) formed in the bottom wall (201) for housing partially the front portion (212) of the optical adapter (210), **characterized in that**
- the bottom opening (250) extends between an edge (240a) of the recess (240) and the side opening (230) so that the bottom opening (250) joins with the side opening (230) to form a single opening;
- the retaining members (220) are arranged adjacent the bottom opening (250) and the recess (240).

2. The optical termination box (100) according to claim 1, wherein:
- the recess (240) comprises a bottom wall (241) arranged at a lower position with respect to the bottom wall (201) of the base (200), thereby a lower portion of the front portion (212) of the optical adapter (210) being allowed to protrude in the bottom opening (250) flush with the bottom wall (201) of the base (200).

3. The optical termination box (100) according to claim 2, wherein:
- the bottom wall (241) of the recess (240) is connected with inner edges (201c, 201d) of the bottom wall (201) of the base (200),
- the bottom wall (241) of the recess (240) and the inner edges (201c, 201d) of the bottom wall (201) of the base (200) define an adapter seat (242) configured to house and support the back portion (211) of the optical adapter (210).

4. The optical termination box (100) according to any of claims 1 to 3, wherein:
- a cover (300) is removably attached on top to the base (200) to define a compartment (202) with the base (200) and to close the compartment (202), the cover (300) having a top wall (301) and one or more side walls (303, 304, 305, 306) projecting from the top wall (301) towards the bottom wall (201) of the base (200),
- a side opening (330) is formed in one side wall (303) of the cover (300),
- the side opening (330) of the cover (300) is arranged in the side wall of the cover to define, with the side of opening (230) of the base (200), a termination opening (101) of the termination box (100), when the cover (300) is attached to the base (200),
- the termination opening (101) is configured to receive an end user optical connector to be connected with the optical adapter (210) retained in the optical termination box (100).

5. The optical termination box (100) according to any of claims 1 to 4, wherein:
- the bottom wall (201) comprises a cable opening (213) for passage of an optical cable and fastening openings for passage of fastening members for fastening the optical termination box (100) to a wallbox (500).

6. The optical termination box (100) according to any of claims 1 to 5, wherein:
- the bottom wall (201) comprises a cable opening (213) for passage of an optical cable,
- a support frame (400) is removably attached underneath the base (200),
- the support frame (400) comprises fastening openings (402) for passage of fastening members for fastening the support frame (400) and the attached base (200) to a wallbox (500).

7. The optical termination box (100) according to any of claims 1 to 5, wherein:
- the bottom wall (201) comprises a cable opening (213) for passage of an optical cable,
- a support frame (600) is removably attached underneath the base (200),
- the support frame (600) comprises a bottom wall (601) and side walls (604, 605, 606, 607) projecting from the bottom wall (601) of the support frame (600) along the direction (X-X), towards the bottom wall (201) of the base (200) of the optical termination box (100),
- at least one of said side walls (604, 605, 606, 607) comprises a weakening line defining a removable portion, said weakening line being configured so that, when said removable portion is removed a passageway is created in said at least one of said sidewalls for the optical cable,
- the bottom wall (601) of the support frame (600) has fastening openings (602) for passage of fastening members for fastening the support frame (600) and the attached base (200) to a wall.

8. The optical termination box (100) according to any of claims 1 to 7, wherein:
- an optical adapter (210) is arranged on the base (200) and removably retained by the retaining members (220), the optical adapter (210) having the back portion (211) supported by the recess (240) and the front portion (210) partially housed in the bottom opening (250).

9. An optical termination assembly (1) comprising:
- the optical termination box (100) according to any of claims 1 to 7,
- a pre-connectorized optical cable having an end portion (11) housed in the optical termination box (100), the end portion (11) comprising an optical connector (13),
wherein the optical termination box (100) comprises:
- an optical adapter (210) having a back portion (211) connected to the optical connector (13) of the pre-connectorized optical cable and a front portion (212), wherein the retaining members (220) removably retain the optical adapter (210), the side opening (230) allows connection from outside of an end user optical connector to the optical connector (13) of the pre-connectorized optical cable, the recess (240) supports the back portion (211) of the optical adapter (210), and the bottom opening (250) houses partially the front portion (212) of the optical adapter (210).

## Patentansprüche

1. Eine optische Abschlussdose (100), die Folgendes umfasst:
- eine Basis (200) mit einer Bodenwand (201) und einer oder mehreren Seitenwänden (203, 204, 205, 206), wobei die eine oder mehrere Seitenwände (203, 204, 205, 206) von der Bodenwand (201) entlang einer Richtung (X-X) quer zu der Bodenwand (201) vorstehen,
- Halteelemente (220), die in der Basis angeordnet und so konfiguriert sind, dass sie einen optischen Adapter (210) abnehmbar halten, wobei der optische Adapter (210) einen hinteren Abschnitt (211) und einen vorderen Abschnitt (212) aufweist,
- eine Seitenöffnung (230), die in einer Seitenwand (203) ausgebildet ist, um einen seitlichen Zugang von außen zu dem optischen Adapter (210) und den Durchgang eines optischen Steckers für den Endbenutzer zu ermöglichen, der mit dem optischen Adapter (210) zu verbinden ist,
- eine Aussparung (240), die in der Bodenwand (201) ausgebildet ist, um den hinteren Abschnitt (211) des optischen Adapters (210) zu stützen,
- eine Bodenöffnung (250), die in der Bodenwand (201) ausgebildet ist, um den vorderen Abschnitt (212) des optischen Adapters (210) teilweise aufzunehmen, **dadurch gekennzeichnet, dass**,
- die untere Öffnung (250) sich zwischen einer Kante (240a) der Aussparung (240) und der seitlichen Öffnung (230) erstreckt, so dass die untere Öffnung (250) mit der seitlichen Öffnung (230) zu einer einzigen Öffnung verbunden ist;
- die Rückhalteelemente (220) neben der Bodenöffnung (250) und der Ausnehmung (240) angeordnet sind.

2. Optische Abschlussdose (100) nach Anspruch 1, wobei:
- die Aussparung (240) eine Bodenwand (241) aufweist, die in Bezug auf die Bodenwand (201) des Bodens (200) in einer niedrigeren Position angeordnet ist, wodurch ein unterer Abschnitt des vorderen Abschnitts (212) des optischen Adapters (210) bündig mit der Bodenwand (201) des Bodens (200) in die Bodenöffnung (250) ragen kann.

3. Optische Abschlussdose (100) nach Anspruch 2, wobei:
- die Bodenwand (241) der Ausnehmung (240) mit Innenkanten (201c, 201d) der Bodenwand (201) des Sockels (200) verbunden ist,
- die Bodenwand (241) der Ausnehmung (240) und die Innenkanten (201c, 201d) der Bodenwand (201) der Basis (200) einen Adaptersitz (242) definieren, der so konfiguriert ist, dass er den hinteren Teil (211) des optischen Adapters (210) aufnimmt und stützt.

4. Optische Abschlussdose (100) nach einem der Ansprüche 1 bis 3, wobei:
- eine Abdeckung (300) abnehmbar an der Oberseite der Basis (200) angebracht ist, um ein Fach (202) mit der Basis (200) zu definieren und das Fach (202) zu verschließen, wobei die Abdeckung (300) eine obere Wand (301) und eine oder mehrere Seitenwände (303, 304, 305, 306) aufweist, die von der oberen Wand (301) in Richtung der unteren Wand (201) der Basis (200) vorstehen,
- eine Seitenöffnung (330) in einer Seitenwand (303) des Deckels (300) ausgebildet ist,
- die Seitenöffnung (330) der Abdeckung (300) in der Seitenwand der Abdeckung angeordnet ist, um mit der Seite der Öffnung (230) der Basis (200) eine Abschlussöffnung (101) der Abschlussbox (100) zu definieren, wenn die Abdeckung (300) an der Basis (200) befestigt ist,
- die Anschlussöffnung (101) so konfiguriert ist, dass sie einen optischen Endbenutzerstecker aufnimmt, der mit dem optischen Adapter (210) verbunden wird, der in der optischen Abschlussdose (100) gehalten wird.

5. Optische Abschlussdose (100) nach einem der Ansprüche 1 bis 4, wobei:
- die Bodenwand (201) eine Kabelöffnung (213) zum Durchführen eines optischen Kabels und Befestigungsöffnungen zum Durchführen von Befestigungselementen zum Befestigen der optischen Abschlussdose (100) an einer Wallbox (500) umfasst.

6. Optische Abschlussdose (100) nach einem der Ansprüche 1 bis 5, wobei:
- die Bodenwand (201) eine Kabelöffnung (213) zum Durchführen eines optischen Kabels aufweist,
- ein Tragrahmen (400) unterhalb des Bodens (200) abnehmbar angebracht ist,
- der Tragrahmen (400) Befestigungsöffnungen (402) für den Durchgang von Befestigungselementen zur Befestigung des Tragrahmens (400) und der angebrachten Basis (200) an einer Wallbox (500) aufweist.

7. Optische Abschlussdose (100) nach einem der Ansprüche 1 bis 5, wobei:
- die Bodenwand (201) eine Kabelöffnung (213) zum Durchführen eines optischen Kabels aufweist,
- ein Stützrahmen (600) abnehmbar unterhalb des Bodens (200) angebracht ist,
- der Tragrahmen (600) eine Bodenwand (601) und Seitenwände (604, 605, 606, 607) aufweist, die von der Bodenwand (601) des Tragrahmens (600) entlang der Richtung (X-X) in Richtung der Bodenwand (201) der Basis (200) der optischen Abschlussdose (100) vorstehen,
- mindestens eine der Seitenwände (604, 605, 606, 607) eine Schwächungslinie umfasst, die einen entfernbaren Abschnitt definiert, wobei die Schwächungslinie so konfiguriert ist, dass, wenn der entfernbare Abschnitt entfernt wird, ein Durchgang in der mindestens einen der Seitenwände für das optische Kabel geschaffen wird,
- die untere Wand (601) des Tragrahmens (600) Befestigungsöffnungen (602) für den Durchgang von Befestigungselementen zur Befestigung des Tragrahmens (600) und der angebrachten Basis (200) an einer Wand aufweist.

8. Optische Abschlussdose (100) nach einem der Ansprüche 1 bis 7, wobei:
- ein optischer Adapter (210) an der Basis (200) angeordnet ist und von den Halteelementen (220) abnehmbar gehalten wird, wobei der hintere Teil (211) des optischen Adapters (210) von der Ausnehmung (240) getragen wird und der vordere Teil (210) teilweise in der Bodenöffnung (250) untergebracht ist.

9. Optische Abschlussanordnung (1), umfassend:
Die optische Abschlussdose (100) nach einem der Ansprüche 1 bis 7,
- ein vorverbundenes optisches Kabel mit einem Endabschnitt (11), der in der optischen Abschlussbox (100) untergebracht ist, wobei der Endabschnitt (11) einen optischen Verbinder (13) umfasst, wobei die optische Abschlussbox (100) umfasst:
- einen optischen Adapter (210) mit einem hinteren Abschnitt (211), der mit dem optischen Verbinder (13) des vorverbundenen optischen Kabels verbunden ist, und einem vorderen Abschnitt (212), wobei die Halteelemente (220) den Adapter (210) abnehmbar halten, die seitliche Öffnung (230) eine Verbindung von außerhalb eines optischen Verbinders des Endbenutzers mit dem optischen Verbinder (13) des vorverbundenen optischen Kabels ermöglicht, die Aussparung (240) den hinteren Abschnitt (211) des optischen Adapters (210) trägt.

## Revendications

1. Boîte de terminaison optique (100) comprenant :
- une base (200) avec une paroi inférieure (201) et une ou plusieurs parois latérales (203, 204, 205, 206), les une ou plusieurs parois latérales (203, 204, 205, 206) faisant saillie de la paroi inférieure (201) suivant une direction (X-X) transversale à la paroi inférieure (201),
- des éléments de retenue (220) disposés dans la base et configurés pour retenir de manière amovible un adaptateur optique (210), l'adaptateur optique (210) ayant une partie arrière (211) et une partie avant (212),
- une ouverture latérale (230) formée dans une paroi latérale (203) pour permettre un accès latéral de l'extérieur à l'adaptateur optique (210) et le passage d'un connecteur optique d'utilisateur final à connecter à l'adaptateur optique (210),
- un évidement (240) formé dans la paroi inférieure (201) pour supporter la partie arrière (211) de l'adaptateur optique (210),
- une ouverture inférieure (250) formée dans la paroi inférieure (201) pour loger partiellement la partie avant (212) de l'adaptateur optique (210), **caractérisée en ce que**
- l'ouverture inférieure (250) s'étend entre un bord (240a) de l'évidement (240) et l'ouverture latérale (230) de telle sorte que l'ouverture inférieure (250) se joint à l'ouverture latérale (230) pour former une seule ouverture ;
- les éléments de retenue (220) sont disposés de manière adjacente à l'ouverture inférieure (250) et à l'évidement (240).

2. Boîte de terminaison optique (100) selon la revendication 1, dans laquelle :
- l'évidement (240) comprend une paroi inférieure (241) disposée à une position inférieure par rapport à la paroi inférieure (201) de la base (200), moyennant quoi une partie inférieure de la partie avant (212) de l'adaptateur optique (210) peut ainsi faire saillie dans l'ouverture inférieure (250) au ras de la paroi inférieure (201) de la base (200).

3. Boîte de terminaison optique (100) selon la revendication 2, dans laquelle :
- la paroi inférieure (241) de l'évidement (240) est reliée aux bords intérieurs (201c, 201d) de la paroi inférieure (201) de la base (200),
- la paroi inférieure (241) de l'évidement (240) et les bords intérieurs (201c, 201d) de la paroi inférieure (201) de la base (200) définissent un siège d'adaptateur (242) configuré pour loger et supporter la partie arrière (211) de l'adaptateur optique (210).

4. Boîte de terminaison optique (100) selon l'une quelconque des revendications 1 à 3, dans laquelle :
- un couvercle (300) est attaché de manière amovible sur le dessus de la base (200) pour définir un compartiment (202) avec la base (200) et pour fermer le compartiment (202), le couvercle (300) ayant une paroi supérieure (301) et une ou plusieurs parois latérales (303, 304, 305, 306) faisant saillie de la paroi supérieure (301) vers la paroi inférieure (201) de la base (200),
- une ouverture latérale (330) est formée dans une paroi latérale (303) du couvercle (300),
- l'ouverture latérale (330) du couvercle (300) est disposée dans la paroi latérale du couvercle pour définir, avec le côté de l'ouverture (230) de la base (200), une ouverture de terminaison (101) de la boîte de terminaison (100), lorsque le couvercle (300) est attaché à la base (200),
- l'ouverture de terminaison (101) est configurée pour recevoir un connecteur optique d'utilisateur final à connecter avec l'adaptateur optique (210) retenu dans la boîte de terminaison optique (100).

5. Boîte de terminaison optique (100) selon l'une quelconque des revendications 1 à 4, dans laquelle :
- la paroi inférieure (201) comprend une ouverture pour câble (213) pour le passage d'un câble optique et des ouvertures de fixation pour le passage d'éléments de fixation permettant de fixer la boîte de terminaison optique (100) à une boîte murale (500).

6. Boîte de terminaison optique (100) selon l'une quelconque des revendications 1 à 5, dans laquelle :
- la paroi inférieure (201) comprend une ouverture pour câble (213) pour le passage d'un câble optique,
- un cadre de support (400) est attaché de manière amovible sous la base (200),
- le cadre de support (400) comprend des ouvertures de fixation (402) pour le passage d'éléments de fixation permettant de fixer le cadre de support (400) et la base attachée (200) à une boîte murale (500).

7. Boîte de terminaison optique (100) selon l'une quelconque des revendications 1 à 5, dans laquelle :
- la paroi inférieure (201) comprend une ouverture pour câble (213) pour le passage d'un câble optique,
- un cadre de support (600) est attaché de manière amovible sous la base (200),
- le cadre de support (600) comprend une paroi inférieure (601) et des parois latérales (604, 605, 606, 607) faisant saillie depuis la paroi inférieure (601) du cadre de support (600) suivant la direction (X-X), vers la paroi inférieure (201) de la base (200) de la boîte de terminaison optique (100),
- au moins une desdites parois latérales (604, 605, 606, 607) comprend une ligne d'affaiblissement définissant une partie amovible, ladite ligne d'affaiblissement étant configurée de telle sorte que, lorsque ladite partie amovible est retirée, une voie de passage est créée dans ladite au moins une desdites parois latérales pour le câble optique,
- la paroi inférieure (601) du cadre de support (600) a des ouvertures de fixation (602) pour le passage d'éléments de fixation permettant de fixer le cadre de support (600) et la base attachée (200) à un mur.

8. Boîte de terminaison optique (100) selon l'une quelconque des revendications 1 à 7, dans laquelle :
- un adaptateur optique (210) est disposé sur la base (200) et retenu de manière amovible par les éléments de retenue (220), l'adaptateur optique (210) comportant la partie arrière (211) supportée par l'évidement (240) et la partie avant (210) partiellement logée dans l'ouverture inférieure (250).

9. Ensemble de terminaison optique (1) comprenant :
- la boîte de terminaison optique (100) selon l'une quelconque des revendications 1 à 7,
- un câble optique préconnectorisé ayant une partie d'extrémité (11) logée dans la boîte de terminaison optique (100), la partie d'extrémité (11) comprenant un connecteur optique (13),
dans lequel la boîte de terminaison optique (100) comprend :
- un adaptateur optique (210) comportant une partie arrière (211) connectée au connecteur optique (13) du câble optique préconnectorisé et une partie avant (212),
dans lequel les éléments de retenue (220) retiennent de manière amovible l'adaptateur optique (210),
l'ouverture latérale (230) permet la connexion depuis l'extérieur d'un connecteur optique d'utilisateur final au connecteur optique (13) du câble optique préconnectorisé,
l'évidement (240) supporte la partie arrière (211) de l'adaptateur optique (210),
et l'ouverture inférieure (250) loge partiellement la partie avant (212) de l'adaptateur optique (210).
